**Europäisches Patentamt**

**European Patent Office**

**Office européen des brevets**

(19)

(11) Veröffentlichungsnummer: **0 322 500 B1**

(12) # EUROPÄISCHE PATENTSCHRIFT

(45) Veröffentlichungstag der Patentschrift: **05.08.92**

(51) Int. Cl.⁵: **F16L 41/06**

(21) Anmeldenummer: **88105679.0**

(22) Anmeldetag: **09.04.88**

(54) **Rohrschelle mit Anschlussrohr für eine Sprinklerdüse.**

(30) Priorität: **24.12.87 DE 3744065**
**30.03.88 DE 3810777**

(43) Veröffentlichungstag der Anmeldung:
**05.07.89 Patentblatt 89/27**

(45) Bekanntmachung des Hinweises auf die
Patenterteilung:
**05.08.92 Patentblatt 92/32**

(84) Benannte Vertragsstaaten:
**AT CH DE FR GB IT LI NL**

(56) Entgegenhaltungen:
**CH-A- 555 506**      **DE-A- 2 260 929**
**DE-A- 2 443 353**      **DE-C- 601 874**
**GB-A- 2 018 379**      **US-A- 3 999 785**

(73) Patentinhaber: **Vieregge, Uwe**
**Kantstrasse 10**
**W-6466 Gründau-Rothenbergen(DE)**

(72) Erfinder: **Vieregge, Uwe**
**Kantstrasse 10**
**W-6466 Gründau-Rothenbergen(DE)**

(74) Vertreter: **Müller-Wolff, Thomas Dipl.-Ing. Patentanwälte Munderich & Müller-Wolff et al**
**Frankfurter Strasse 84**
**W-6466 Gründau-Rothenbergen(DE)**

EP 0 322 500 B1

Rank Xerox (UK) Business Services

## Beschreibung

Die Erfindung betrifft eine Rohrverbindung gemäß dem Oberbegriff des Anspruchs 1.

Eine Rohrverbindung der eingangs genannten Art ist aus der US-A-3 999 785 bekannt. Hierbei ist zwischen dem Mündungsteil der Muffe und der Bohrverbindung ein Spalt vorhanden, durch den hindurch der Druck auf die Innenseite der Rohrschelle einwirkt. Zwischen der Innenseite der Rohrschelle und der Außenseite des Rohres befindet sich ein Dichtungsmaterial, das die Rohrschelle nach außenhin abdichtet. Bei hohen Drücken wirkt der Druck durch den Spalt zwischen dem Mündungsteil der Muffe und der Bohrverbindung hindurch auf das Innere der Verbindungsflansche und weitet diesen auf.

Bei Sprinkleranlagen sind oft mehrere Tausend der Rohrschellen an Leitungen in engem Abstand zueinander angeordnet. Um den nötigen Druck für das Versprühen von Wasser zum Löschen von Bränden aufrechtzuerhalten, müssen die Verbindungen vom Anschlußrohr zur Sprinklerdüse möglicht verlustarm sein. Spaltförmige öffnungen und andere Strömungshindernisse sollten deshalb vermieden werden.

Aufgabe der vorliegenden Erfindung ist es, eine Rohrverbindung der eingangs genannten Art derart auszubilden, daß die Verbindung mit dem Anschlußrohr zur Sprinklerdüse möglichst verlustarm ausgebildet ist und bei einfacher Positionierung im System hohen Drücken gewachsen ist, Ohne daß es zu Verformungen der Verbindungsflansche zwischen den Schellenteilen kommt.

Die Aufgabe wird erfindungsgemäß durch die in den Patentansprüchen angegebenen Merkmale gelöst. Ergänzend zur Abdichtung der Anbohrung des Rohres mit dem Ansatz des sich verjüngenden äußeren Begrenzungsbereiches ist vorgesehen, daß dieser auch eine Nut zur Aufnahme einer temperaturfesten Dichtung umfaßt, wobei der äußere Begrenzungsbereich des Ansatzes kegelflächig, konisch oder ballig ausgebildet ist. Diese Ausbildung vermittelt der Dichtung einen sicheren Halt auch in kritischen Momenten.

Die bereits eingangs gestellte Forderung einer verlustarmen Abzweigung der zu den einzelnen Sprinklerdüsen führenden Flüssigkeitsströme wird ergänzend dadurch berücksichtigt, daß in dem zum Hauptrohr führenden Anschlußrohr eine lavalartige Düse, die entsprechend der inneren Peripherie des Rohres abgegrenzt ist, ausgebildet ist, wobei die Düse mit dem Anschlußrohr integriert oder aber mit diesem kraftschlüssig oder aber durch thermisches Einschrumpfen verbunden ist.

Eine besonders geeignete Vorrichtung für die Einleitung der Strömung in das Anschlußrohr ist eine Düse mit folgenden Zirka-Abmessungen: daß die Länge der Düse um ein Zwölftel kürzer ist, als der Durchmesser des Anschlußrohres, wobei die Ansatzpunkte für dieses Maß die maximale Eindringtiefe entsprechend der Peripherie des Rohrinnendurchmessers ist,

daß der Durchmesser der Engstelle der Düse um ein Sechstel gegenüber dem Außendurchmesser reduziert ist, und daß der Hochpunkt der Engstelle bei einem Drittel der Düsenlänge, gemessen vom Eintrittsbereich ausgehend, liegt.

Die mit der Geschwindigkeitssteigerung und dem damit verbundenen Druckabfall erreichte Steigerung des Flüssigkeitsdurchsatzes liegt etwa zwischen 50 und 80%.

Damit erfüllt die vorgeschlagene Lösung in vollem Umfang die Forderungen der Aufgabenstellung.

Die erfindungsgemäße Rohrverbindung mit Anschlußrohr für eine Sprinklerdüse wird durch die beispielsweise Darstellung näher erläutert.

Figur 1 zeigt im Halbschnitt I-I einen Schnitt durch das Rohr, das Anbohrschellenteil und das Rohrschellenteil.

Figur 2 zeigt die Draufsicht zu Figur 1, und zwar auf das Anbohrschellenteil.

Figur 3 zeigt die Unteransicht von Figur 1 auf das Rohrschellenteil.

Figur 4 zeigt im Halbschnitt Figur 1, und zwar einschließlich Anbohrschellenteil mit eingeschraubtem, zur Sprinklerdüse führendem Anschlußrohr, wobei die düsenartige Ausbildung des Eintrittsbereiches verdeutlicht wird.

Figur 5 zeigt einen Ausschnitt aus Figur 4, aus dem sich die Maßabhängigkeit der Düsen untereinander ergibt.

Die Rohrschelle 1.1 umfaßt das Rohr 1 und besteht aus dem Anbohrschellenteil 2 und dem Rohrschellenteil 3, wobei die beiden Schellenteile durch vergütete Stahlschrauben 5 beidseitig des Rohres 1 symmetrisch verbunden sind, und für diesen Zweck die Verbindungsflansche 2.1 mit Durchgangsbohrungen und die Verbindungsflansche 3.1 mit Gewindebohrungen versehen sind.

Des weiteren liegt um die Bohrung 1.2 des Rohres 1 in einer Nut 2.8 des Anbohrschellenteiles 2 eine temperaturfeste, plastische bis elastische Dichtung 4 ein.

Das Anbohrschellenteil 2 weist senkrecht zu seinen beidseitig ausgebildeten Verbindungsflanschen 2.1, radial zum Rohr 1 gerichtet, eine turmartig ausgebildete Muffe (2.2) mit Gewinde 2.3 aus, die an der Innenperipherie 2.4 des Anbohrschellenteiles 2 in einen ringartigen Bund 2.5 überführt, der mit seinem konisch sich verjüngenden Begrenzungsbereich 2.6 in die Bohrung des Rohres 1 eingreift.

Der Durchmesser der Bohrung 1.2 ist identisch mit dem des Ansatzbereiches 2.7 des konischen Bundes 2.5. Das dem Anbohrschellenteil 2 entgegengerichtete Schellenteil 3 weist hinsichtlich seiner Flansche 3.1 eine korrespondierende Ausbildung zu den Flanschen 2.1 aus.

Entlang der Randbegrenzungen der Flansche 2.1 und 3.1 sind, zum Schellenaußendurchmesser ansteigend, gerichtete Versteifungsrippen 2.9 und 3.9 ausgebildet, wobei die Verbindungsschrauben 5 zwischen diesen Rippen angeordnet sind.

Die Schellenteile sind in der überwiegenden Mehrzahl aus Stahl geschmiedet, wobei die Qualität als solche durch den VDS, d.h. durch den Verband der Sachversicherer, vorgeschrieben ist. Das gleiche gilt für die Temperatur- und Druckfestigkeit.

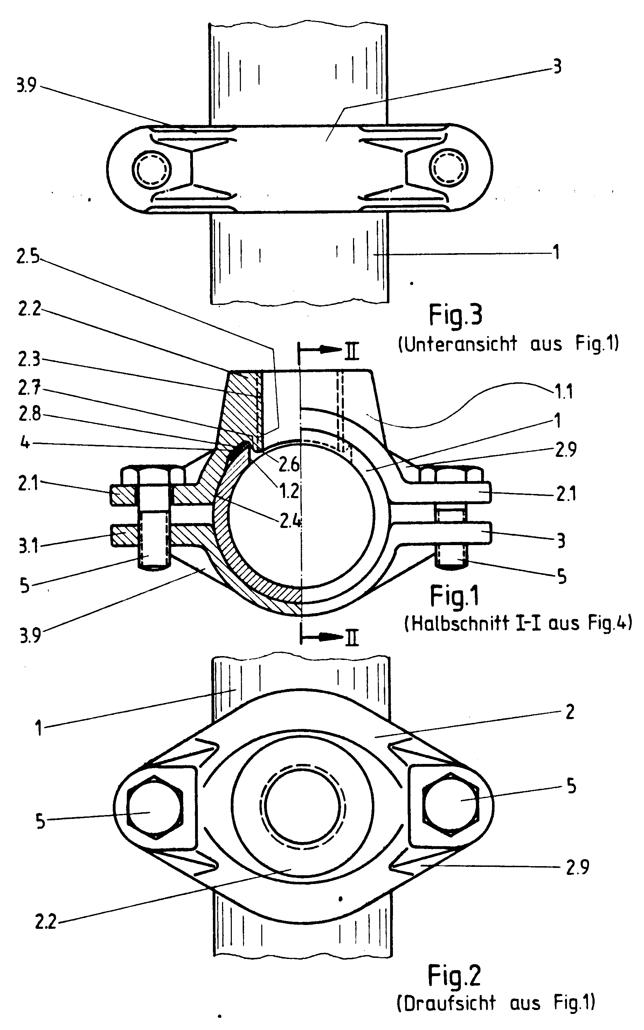

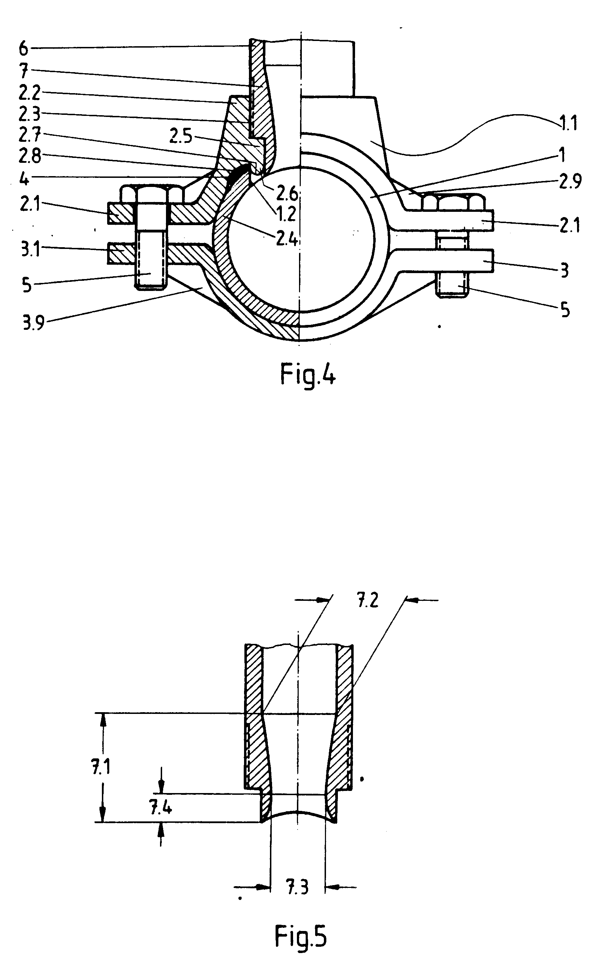

In Figur 4 ist das zur Sprinklerdüse führende Anschlußrohr 6 eingezeichnet, dessen Innendurchmesser identisch mit dem Außendurchmesser des Gewindes 2.3 ist. In das Anschlußrohr 6 ist bei diesem Beispiel eine lavalartige Düse 7 eingepaßt, wobei das Ansatzmaß in Achsrichtung zum Rohr 6 durch die Bogenhöhe des Rohres 1.2 und die ineinanderdringenden Rohre bestimmt wird.

Durch Figur 5, die einen Ausschnitt aus einer lavalähnlichen Düse 7 darstellt, werden in etwa die Abhängigkeiten der einzelnen Maße voneinander wie folgt ausgewiesen:

1.) Längenmaß = D - 1/12 = 7.1
2.) Durchmesser = 7.2
3.) Durchmesser an Engstelle = L - 1/6 = 7.3
4.) Höhenmaß der Engstelle = L : 3 = 7.4

**Patentansprüche**

1. Rohrverbindung zum lösbaren Verbinden eines Anschlußrohres (6) für eine Sprinklerdüse mit einem Hauptrohr (1), bestehend aus dem Hauptrohr (1), dem Anschlußrohr (6), einem Anbohrschellenteil (2) und einen Rohrschellenteil, das innenseitig mit dem Anbohrschellenteil (2) und seinen gegenüberliegenden Verbindungsflanschen (2.1) korrespondiert, wobei an den beiden Schellenteilen (2 u.3) etwa entlang der Randbegrenzungen ihrer Flansche (2.1 u.3.1) und zum Schellenaußendurchmesser führend, Versteifungsrippen (2.9 u.3.9) ausgebildet und die Verbindungsschrauben (5) zwischen diesen Rippen angeordnet sind, und wobei das Anbohrschellenteil (2) senkrecht zu seinen beiden symmetrisch ausgebildeten Verbindungsflanschen (2.1) und mittig radial zum Rohr (1) gerichtet mit einer turmartig ausgebildeten Muffe (2.2) mit Gewinde (2.3) versehen ist, die an ihrer Innenperipherie (2.4) in Fortsetzung des Gewindes (2.3) in einen ringartigen Bund (2.5) überführt, der mit seinem sich verjüngenden äußeren Begrenzungsbereich (2.6) in die Bohrverbindung (1.2) eingreift, dadurch gekennzeichnet,
**daß** im Inneren des zum Hauptrohr (1) führenden Anschlußrohres (6) eine Laval-Düse (7) ausgebildet ist, die entsprechend der inneren Peripherie des Rohres (1) abgegrenzt ist, wobei die Düse (7) mit dem Anschlußrohr (6) integriert oder aber mit diesem kraftschlüssig oder aber durch thermisches Einschrumpfen verbunden ist,
**daß** das Anschlußrohr (6) in das Gewinde (2.3) der Muffe (2.2) eingeschraubt ist und stoßfrei in den ringartigen Bund (2.5) mündet, und
**daß** der sich verjüngende äußere Begrenzungsbereich (2.6) des ringartigen Bundes (2.5) dichtend in die Bohrung (1.2) eingreift.

2. Rohrschelle nach Anspruch 1, dadurch gekennzeichnet,
**daß** der Durchmesser der Anbohrung (1.2) des Rohres (1) mit dem Ansatz (2.7) des sich verjüngenden äußeren Begrenzungsbereiches (2.6) korrespondiert, wobei dieser durch eine Nut (2.8) zur Aufnahme einer temperaturfesten Dichtung (4) umfaßt ist.

3. Rohrschelle nach einem der vorhergehenden Ansprüche, gekennzeichnet durch eine Laval-Düse (7) mit folgenden Zirka-Abmessungen,
**daß** die Länge (7.1) der Düse (7) um etwa ein Zwölftel kürzer ist als der Durchmesser (7.2) des Anschlußrohres (6), wobei die Ansatzpunkte für dieses Maß die maximale Eindringtiefe entsprechend der Peripherie des Rohrinnendurchmessers (1.2) ist,
**daß** der Durchmesser der Engstelle (7.3) der Düse (7) um ein Sechstel gegenüber dem Außendurchmesser (7.2) der Düse (7) reduziert ist, und
**daß** der Hochpunkt (7.4) der Engstelle bei einem Drittel der Düsenlänge (7.1), gemessen vom Eintrittsbereich ausgehend, liegt.

**Claims**

1. Tube joint for the detachable mounting of a connecting tube (6), for a sprinkler nozzle, with a main tube (1), consisting of a main tube (1), the connecting tube (6), a split service collar (2) and a pipe clamp, characterised by that the inner surface of the split service collar (2) and its opposite mounting flange (2.1) correspond, whereby on both clamp parts (2 and 3) approximately along the edges of their flanges (2.1 and 3.1) and directed towards the outer diameter of the clamps are reinforcement ribs (2.9 and 3.9) and the connecting screws are situated between these ribs, and whereby the split service collar (2) is situated perpendicular to the two symmetrical connecting flanges (2.1) and radially central to the tube (1) with a sleeve (2.2) - in the form of a tower - with a thread (2.3) which on its inner periphery (2.4) in the extension of the thread (2.3) transposes into a ring-type collar (2.5) which with its thinning external limiting area (2.6) fits into the tube joint (1.2),
that the connecting tube (6) is in the form of a Laval nozzle leading into the main tube (1), and extends only as far as the inner periphery of the tube (1), whereby the nozzle (7) is integrated with the connecting tube (6) or is through thermal shrinking or through tight-fitting connected to it (6), that the connecting tube (6) is screwed into the thread (2.3) of the sleeve (2.2) and flows smoothly into the ring-type collar (2.5) and
that the thinning external limiting area (2.6) of the ring-type collar (2.5) fits sealingly into the hole (1.2).

2. Tube joint after claim 1 characterised by that the diameter of the hole (1.2) of the tube (1) corresponds with the shoulder (2.7) of the thinning external limiting area (2.6) whereby this also comprises a groove (2.8) into which a temperature resistant seal (4) can be fitted.

3. Tube joint after the previously described claims characterised by a Laval nozzle (7) having the following approximate dimensions,
the length (7.1) of the nozzle (7) is approx. one twelfth shorter than the diameter (7.2) of the connecting tube (6), whereby the reference point for this dimension is the maximum insertion depth resp. the periphery of the inner tube diameter (1.2),
that the diameter of the narrowest section (7.3) of the nozzle (7) is reduced by one sixth of the outer diameter (7.2) of the nozzle (7) and
that the high point (7.4) of this section is at one third of the nozzle length (7.1) measured from the entrance zone.

**Revendications**

1. Raccord à tubes permettant la jonction mobile du tube de raccordement (6) d'une buse de sprinkler avec un tube principal (1) consistant en le tube principal (1), le tube de raccordement (6), un collier de prise (2) et une bride d'attache (3) et qui englobe sur sa face intérieure la partie collier de prise (2) et les flasques d'assemblage situées aux extrémités de celui-ci (2.1), les deux demi-brides (2 et 3) étant conçues de telle sorte que des nervures de raidissement (2.9 et 3.9) sont placées dans une direction excentrique le long des rives de leurs flasques (2.1 et 3.1) et que les vis d'assemblage (5) sont situées entre ces nervures, et la partie collier de prise (2) étant placée verticalement par rapport à ses deux flasques d'assemblage symétriques (2.1) et centrée radialement sur le tube principal (1) à l'aide d'un manchon fileté (2.3) en forme de tour (2.2) qui conduit sur l'enveloppe intérieure du collier de prise (2.4) dans le prolongement du filetage (2.3) à un collet annulaire (2.5) prenant avec l'extérieur de la lèvre effilée de son embout (2.6) dans la forure de raccord (1.2)
caractérisé en ce que
à l'intérieur du tube de raccordement (6) conduisant au tube principal (1) une tuyère de Laval (7) est configurée de telle façon qu'elle est limitée par l'enveloppe interne du tube principal (1), la tuyère étant intégrée dans le tube de raccordement (6) ou bien encastrée dans celui-ci en force ou par contraction thermique,
le tube de raccordement (6) est vissé dans le filetage (2.3) du manchon de raccordement (2.2) et débouche librement dans le collet annulaire (2.5), et
l'extérieur de la lèvre effilée de l'embout (2.6) du collet annulaire (2.5) prend dans la forure (1.2) en la rendant étanche.

2. Bride d'attache pour tube d'après la revendication 1.) caractérisée en ce que le diamètre de la forure (1.2) du tube principal (1) correspond au diamètre extérieur de l'épaulement (2.7) de la lèvre effilée de l'embout (2.6) du tube de raccordement, celui-ci comportant une rainure circonscrite (2.8) destinée à recevoir un joint d'étanchéité (4) résistant à la température.

3. Bride d'attache selon l'une des revendications précédentes caractérisée par une tuyère de Laval (7) possédant les dimensions approximatives suivantes:
   - la longueur (7.1) de la tuyère est environ plus courte d'un douzième que le diamètre intérieur (7.2) du tube de raccordement (6), les critères de détermination de cette mesure étant la profondeur de pénétration maximale en fonction de l'enveloppe intérieure (1.2) du tube principal,
   - le diamètre à l'étranglement (7.3) de la tuyère (7) est réduit d'un sixième par rapport au diamètre de sortie (7.2) de celle-ci (7) et

- le point haut (7.4) de l'étranglement se trouve à un tiers de la longueur de la tuyère (7.1) mesuré à partir de l'entrée de celle-ci.

3.9

3

1

**Fig.3**
(Unteransicht aus Fig.1)

2.5

2.2

2.3

2.7

2.8

4

2.1

3.1

5

3.9

1.1

1

2.9

2.1

2.6

1.2

2.4

3

5

**Fig.1**
(Halbschnitt I-I aus Fig.4)

1

2

5

5

2.9

2.2

**Fig.2**
(Draufsicht aus Fig.1)

6

Fig.4

Fig.5